# EUROPEAN PATENT APPLICATION

(11) **EP 3 792 593 A1**
(43) Date of publication of application: **17.03.2021**
(21) Application number: 20195610.9
(22) Date of filing: 10.09.2020
(51) Int. Cl.: G01C 15/00

(54) **THREE-DIMENSIONAL SURVEY APPARATUS, THREE-DIMENSIONAL SURVEY METHOD, AND THREE-DIMENSIONAL SURVEY PROGRAM**

(30) Priority: 13.09.2019 JP 2019167414
(71) Applicant: TOPCON CORPORATION, Tokyo 174-8580 (JP)
(72) Inventor: ITO, Tadayuki, Itabashi-ku, Tokyo 174-8580 (JP)
(74) Representative: Mewburn Ellis LLP

(57) **Abstract**

To provide a three-dimensional survey apparatus, a three-dimensional survey method, and a three-dimensional survey program which are capable of executing registration of point cloud data in an efficient manner. A three-dimensional survey apparatus includes a collimating ranging unit, a scanner unit, and a control calculation portion. The control calculation portion calculates and stores coordinates of a machine reference point of the collimating ranging unit at a survey position by collimation of a telescope portion, stores point cloud data having been acquired at the survey position by controlling the scanner unit, and executes control for performing, based on the stored coordinates of the machine reference point, positioning of the point cloud data having been acquired by the scanner unit.

## Description

### BACKGROUND OF THE INVENTION

### 1. Field of the Invention

The present invention relates to a three-dimensional survey apparatus, a three-dimensional survey method, and a three-dimensional survey program which acquire three-dimensional data of a measurement object.

### 2. Description of the Related Art

Japanese Patent Application Laid-open No. 2017-223540 discloses a survey system provided with a total station and a laser scanner unit. The total station is a survey apparatus that measures three-dimensional coordinates (three-dimensional data) of a measurement point with high accuracy. The laser scanner unit rotatingly emits pulse laser light as ranging light and performs ranging for each pulse of pulse laser light to acquire point cloud data. More specifically, the laser scanner unit irradiates a measurement object with pulse laser light as ranging light and receives reflected light of each portion of the pulse laser light having been reflected by the measurement object, and by measuring a distance to the measurement object and detecting an emission direction (a horizontal angle and a vertical angle) of the ranging light, the laser scanner unit acquires three-dimensional data (three-dimensional point cloud data) of a large number of points of the measurement object.

Measurement accuracy of a total station including industrial measurement is extremely high. For example, when used in the field of survey, a total station can ensure measurement accuracy of 1 mm or less with respect to distance accuracy and, at the same time, a total station can ensure sufficient accuracy that is required by a class I theodolite and the like with respect to angle accuracy. The laser scanner unit is capable of executing a point group measurement of several hundreds of thousands of points per second and a highly-efficient survey can be realized at an extremely high speed.

For example, after the total station measures three-dimensional data with high accuracy and the laser scanner unit acquires point cloud data at high speed, the three-dimensional data acquired by the total station and the point cloud data acquired by the laser scanner unit are input to another computer or the like that differs from the survey apparatuses. In addition, registration of point cloud data which involves performing positioning, mapping, association, or the like between the three-dimensional data acquired by the total station and the point cloud data acquired by the laser scanner unit is executed by the other computer.

However, depending on the three-dimensional data having been acquired by the total station and the point cloud data having been acquired by the laser scanner unit, the registration may require a relatively long processing time or the registration may not even be completable. In addition, in order to reduce processing time of the registration or to more reliably complete the registration, the registration of the point cloud data may be performed manually. In this manner, a three-dimensional survey apparatus that acquires point cloud data of a measurement object has room for improvement in that registration of the point cloud data consumes time and effort.

### SUMMARY OF THE INVENTION

The present invention has been made in order to solve the problem described above and an object thereof is to provide a three-dimensional survey apparatus, a three-dimensional survey method, and a three-dimensional survey program which are capable of executing registration of point cloud data in an efficient manner.

The problem described above is solved by a three-dimensional survey apparatus according to the present invention which acquires three-dimensional data of a measurement object, the three-dimensional survey apparatus including: a collimating ranging unit which irradiates the measurement object with first ranging light by collimation of a telescope portion and which, based on first reflected ranging light that is reflection of the first ranging light by the measurement object, measures a distance to the measurement object and detects a direction of the collimation; a scanner unit which is integrally provided with the collimating ranging unit and rotatingly emits second ranging light and which, based on second reflected ranging light that is reflection of the second ranging light by the measurement object, measures a distance to the measurement object and detects an emission direction of the second ranging light to acquire point cloud data related to the measurement object; and a control calculation portion which is provided in at least one of the collimating ranging unit and the scanner unit, wherein the control calculation portion calculates and stores coordinates of a machine reference point of the collimating ranging unit at a survey position by collimation of the telescope portion, stores the point cloud data having been acquired at the survey position by controlling the scanner unit, and executes control for performing, based on the stored coordinates of the machine reference point, positioning of the point cloud data having been acquired by the scanner unit.

With the three-dimensional survey apparatus according to the present invention, the scanner unit that acquires point cloud data related to a measurement object is integrally provided with the collimating ranging unit that performs ranging and angle measurement related to the measurement object. The control calculation portion calculates and stores coordinates of a machine reference point of the collimating ranging unit at a survey position by collimation of the telescope portion of the collimating ranging unit. In addition, the control calculation portion stores point cloud data having been acquired at the survey position by controlling the scanner unit. Furthermore, the control calculation portion executes control for performing, based on the stored coordinates of the machine reference point of the collimating ranging unit, positioning of the point cloud data having been acquired by the scanner unit. Accordingly, the point cloud data having been acquired by the scanner unit is automatically aligned at a correct position. Therefore, when executing registration of point cloud data, an occurrence of a situation where a relatively long processing time is necessary, a situation where the registration of the point cloud data cannot be completed, or a situation where manually performing the registration of the point cloud data requires considerable effort can be suppressed. Accordingly, the three-dimensional survey apparatus according to the present invention can execute registration of point cloud data in an efficient manner.

In the three-dimensional survey apparatus according to the present invention, preferably, the control calculation portion executes control for performing, based on a plurality of pieces of the three-dimensional data included in the point cloud data having been acquired by the scanner unit, detailed positioning of the point cloud data having been positioned.

With the three-dimensional survey apparatus according to the present invention, the control calculation portion executes control for performing, based on a plurality of pieces of the three-dimensional data included in the point cloud data having been acquired by the scanner unit, detailed positioning of the point cloud data having been positioned. Therefore, even when, hypothetically, the three-dimensional data having been acquired by the collimating ranging unit includes an error, the control calculation portion can use the three-dimensional data of a large number of measurement points having been acquired by the scanner unit to correct the positioning of the point cloud data and perform positioning of the point cloud data with higher accuracy. As a result, the point cloud data having been acquired by the scanner unit is aligned at an even more correct position. Accordingly, the three-dimensional survey apparatus according to the present invention can execute registration of point cloud data in an even more efficient manner.

In the three-dimensional survey apparatus according to the present invention, preferably, the control calculation portion performs the detailed positioning based on a plurality of pieces of the three-dimensional data included in the point cloud data having been acquired by the scanner unit at each of a plurality of the survey positions that differ from one another.

With the three-dimensional survey apparatus according to the present invention, the control calculation portion performs the detailed positioning of the point cloud data based on a plurality of pieces of the three-dimensional data included in the point cloud data having been acquired by the scanner unit at each of a plurality of the survey positions that differ from one another. Therefore, when the measurement object is a relatively high architectural structure such as a building and a location where a target of measurement can be installed is limited to a predetermined location, using three-dimensional data of a large number of measurement points having been acquired by the scanner unit at each survey position, the control calculation portion can adjust an inconsistency in three-dimensional data at each survey position related to a characteristic portion such as a predetermined surface of the measurement object and can perform positioning of the point cloud data with higher accuracy. As a result, the point cloud data having been acquired by the scanner unit is aligned at an even more correct position. Accordingly, the three-dimensional survey apparatus according to the present invention can execute registration of point cloud data in an even more efficient manner.

The problem described above is solved by a three-dimensional survey method according to the present invention which is executed by a three-dimensional survey apparatus that acquires three-dimensional data of a measurement object, the three-dimensional survey apparatus including: a collimating ranging unit which irradiates the measurement object with first ranging light by collimation of a telescope portion and which, based on first reflected ranging light that is reflection of the first ranging light by the measurement object, measures a distance to the measurement object and detects a direction of the collimation; a scanner unit which is integrally provided with the collimating ranging unit and rotatingly emits second ranging light and which, based on second reflected ranging light that is reflection of the second ranging light by the measurement object, measures a distance to the measurement object and detects an emission direction of the second ranging light to acquire point cloud data related to the measurement object; and a control calculation portion which is provided in at least one of the collimating ranging unit and the scanner unit, wherein the three-dimensional survey method includes the steps of: calculating and storing coordinates of a machine reference point of the collimating ranging unit at a survey position by collimation of the telescope portion; storing the point cloud data having been acquired at the survey position by controlling the scanner unit; and performing, based on the stored coordinates of the machine reference point, positioning of the point cloud data having been acquired by the scanner unit.

With the three-dimensional survey method according to the present invention, in the three-dimensional survey apparatus that executes the three-dimensional survey method, the scanner unit that acquires point cloud data related to a measurement object is integrally provided with the collimating ranging unit that performs ranging and angle measurement related to the measurement object. In addition, coordinates of a machine reference point of the collimating ranging unit at a survey position are calculated by collimation of the telescope portion of the collimating ranging unit and the coordinates are stored. Furthermore, point cloud data having been acquired at the survey position by controlling the scanner unit is stored. Moreover, a step of performing positioning of the point cloud data having been acquired by the scanner unit is executed based on the stored coordinates of the machine reference point of the collimating ranging unit. Accordingly, the point cloud data having been acquired by the scanner unit is automatically aligned at a correct position. Therefore, when executing registration of point cloud data, an occurrence of a situation where a relatively long processing time is necessary, a situation where the registration of the point cloud data cannot be completed, or a situation where manually performing the registration of the point cloud data requires considerable effort can be suppressed. Accordingly, the three-dimensional survey method according to the present invention can execute registration of point cloud data in an efficient manner.

The problem described above is solved by a three-dimensional survey program according to the present invention which is executed by a computer of a three-dimensional survey apparatus that acquires three-dimensional data of a measurement object, the three-dimensional survey apparatus including: a collimating ranging unit which irradiates the measurement object with first ranging light by collimation of a telescope portion and which, based on first reflected ranging light that is reflection of the first ranging light by the measurement object, measures a distance to the measurement object and detects a direction of the collimation; a scanner unit which is integrally provided with the collimating ranging unit and rotatingly emits second ranging light and which, based on second reflected ranging light that is reflection of the second ranging light by the measurement object, measures a distance to the measurement object and detects an emission direction of the second ranging light to acquire point cloud data related to the measurement object; and a control calculation portion which is provided in at least one of the collimating ranging unit and the scanner unit, wherein the three-dimensional survey program causes the computer to execute the steps of: calculating and storing coordinates of a machine reference point of the collimating ranging unit at a survey position by collimation of the telescope portion; storing the point cloud data having been acquired at the survey position by controlling the scanner unit; and performing, based on the stored coordinates of the machine reference point, positioning of the point cloud data having been acquired by the scanner unit.

With the three-dimensional survey program according to the present invention, in the three-dimensional survey apparatus that is provided with a computer that executes the three-dimensional survey program, the scanner unit that acquires point cloud data related to a measurement object is integrally provided with the collimating ranging unit that performs ranging and angle measurement related to the measurement object. In addition, coordinates of a machine reference point of the collimating ranging unit at a survey position are calculated by collimation of the telescope portion of the collimating ranging unit and the coordinates are stored. Furthermore, point cloud data having been acquired at the survey position by controlling the scanner unit is stored. Moreover, a step of performing positioning of the point cloud data having been acquired by the scanner unit is executed based on the stored coordinates of the machine reference point of the collimating ranging unit. Accordingly, the point cloud data having been acquired by the scanner unit is automatically aligned at a correct position. Therefore, when executing registration of point cloud data, an occurrence of a situation where a relatively long processing time is necessary, a situation where the registration of the point cloud data cannot be completed, or a situation where manually performing the registration of the point cloud data requires considerable effort can be suppressed. Accordingly, the three-dimensional survey program according to the present invention can execute registration of point cloud data in an efficient manner.

According to the present invention, a three-dimensional survey apparatus, a three-dimensional survey method, and a three-dimensional survey program which are capable of executing registration of point cloud data in an efficient manner can be provided.

### BRIEF DESCRIPTION OF THE DRAWINGS

FIG. 1 is a block diagram that mainly represents a structural system of a three-dimensional survey apparatus according to an embodiment of the present invention;
FIG. 2 is a block diagram that mainly represents a control system of the three-dimensional survey apparatus according to the present embodiment;
FIG. 3 is a flow chart that represents a first operation of the three-dimensional survey apparatus according to the present embodiment;
FIG. 4 is a flow chart that represents a second operation of the three-dimensional survey apparatus according to the present embodiment;
FIG. 5 is a flow chart that represents a third operation of the three-dimensional survey apparatus according to the present embodiment; and
FIG. 6 is a schematic view illustrating circumstances in which the three-dimensional survey apparatus according to the present embodiment acquires point cloud data of a measurement object at a plurality of survey positions.

### DESCRIPTION OF THE PREFERRED EMBODIMENTS

Hereinafter, a preferred embodiment of the present invention will be described in detail with reference to the drawings.

Although the embodiment described hereinafter is a preferred specific example of the present invention and therefore involves various favorable technical limitations, it is to be understood that the scope of the present invention is by no means limited by the embodiment unless specifically noted otherwise hereinafter. It should also be noted that, in the drawings, similar components will be denoted by same reference signs and detailed descriptions thereof will be omitted when appropriate.

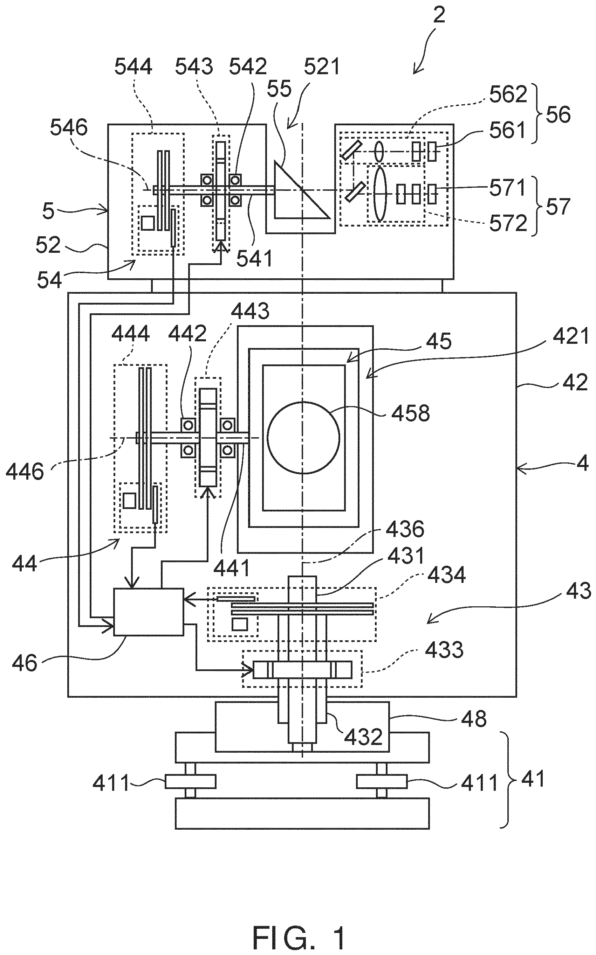

FIG. 1 is a block diagram which mainly shows a structural system of a three-dimensional survey apparatus according to an embodiment of the present invention.

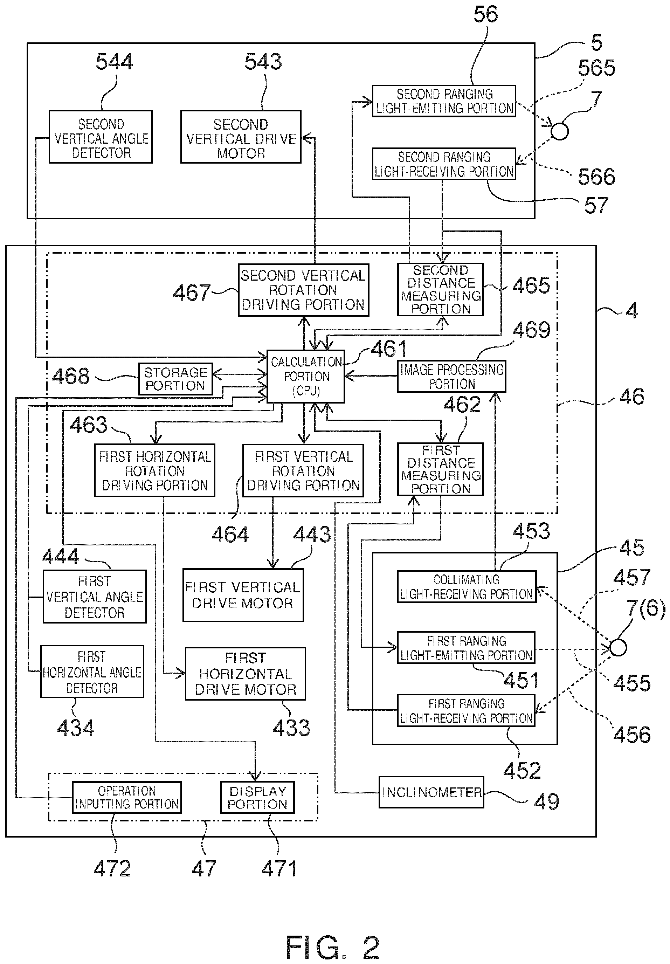

FIG. 2 is a block diagram which mainly shows a control system of the three-dimensional survey apparatus according to the present embodiment.

A three-dimensional survey apparatus 2 according to the present embodiment includes a collimating ranging unit 4 and a scanner unit 5 and acquires three-dimensional data of a measurement object 7 such as an architectural structure. The collimating ranging unit 4 is referred to as a total station or the like and, due to collimation of a telescope portion 45, irradiates the measurement object 7 with first ranging light 455 (refer to FIG. 2), measures a distance to the measurement object 7 based on first reflected ranging light 456 (refer to FIG. 2) that is the first ranging light 455 having been reflected by the measurement object 7 and first internal reference light (not illustrated), and detects an emission direction of the first ranging light 455 or, in other words, a direction of collimation of the telescope portion 45. In other words, the collimating ranging unit 4 is a device that performs ranging and angle measurement. Details of the collimating ranging unit 4 will be provided later.

Measurement objects of which the collimating ranging unit 4 performs ranging and angle measurement include a target of measurement 6 such as a prism. In other words, the collimating ranging unit 4 is capable of performing ranging and angle measurement with respect to the target of measurement 6 such as a prism as a measurement object. The prism to be used as the target of measurement 6 is not particularly limited and may be a circular prism, a spherical prism, or a planar prism.

The scanner unit 5 is integrally provided with the collimating ranging unit 4. In the three-dimensional survey apparatus 2 according to the present embodiment, the scanner unit 5 is fixed to an upper part of the collimating ranging unit 4. Alternatively, the scanner unit 5 may be rotatably provided relative to the collimating ranging unit 4. The scanner unit 5 irradiates the measurement object 7 with second ranging light 565 (refer to FIG. 2), measures a distance to the measurement object 7 based on second reflected ranging light 566 (refer to FIG. 2) that is reflection of the second ranging light 565 by the measurement object 7 and second internal reference light (not illustrated), and detects an emission direction of the second ranging light 565. The scanner unit 5 is a device that performs ranging and angle measurement in a similar manner to the collimating ranging unit 4.

More specifically, the scanner unit 5 acquires three-dimensional coordinates (three-dimensional data) of a large number of measurement points with respect to the measurement object 7 by performing rotational irradiation with the second ranging light 565 to measure the distance to the measurement object 7 and to detect the emission direction of the second ranging light 565. In other words, the scanner unit 5 acquires three-dimensional data (point cloud data) of a large number of measurement points of the measurement object 7. Details of the scanner unit 5 will be provided later.

The collimating ranging unit 4 according to the present embodiment has a leveling portion 41, a first mount portion 42, a first horizontal rotation portion 43, a first vertical rotation portion 44, the telescope portion 45, a control calculation portion 46, an operation display portion 47, a base portion 48, and an inclinometer 49. The collimating ranging unit 4 need not necessarily include the inclinometer 49. The collimating ranging unit 4 may have an automatic tracking function that automatically searches for the target of measurement 6 as a measurement object.

The control calculation portion 46 has a calculation portion 461, a first distance measuring portion 462, a first horizontal rotation driving portion 463, a first vertical rotation driving portion 464, a second distance measuring portion 465, a second vertical rotation driving portion 467, a storage portion 468, and an image processing portion 469. The calculation portion 461 is a central processing unit (CPU) or the like and, based on a signal (command) transmitted from an operation inputting portion 472 of the operation display portion 47, executes activation of a program, control processing of the signal, calculations, drive control of a display portion 471 of the operation display portion 47, and the like. In other words, the calculation portion 461 performs control of the entire three-dimensional survey apparatus 2 and causes the display portion 471 to display survey conditions, measurement results (ranging results and angle measurement results), image processing results (2D images of received light intensity), and the like.

Alternatively, the control calculation portion 46 may be provided in the scanner unit 5 or may be provided in both the collimating ranging unit 4 and the scanner unit 5. In other words, the control calculation portion 46 is provided in at least one of the collimating ranging unit 4 and the scanner unit 5.

The first distance measuring portion 462, the first horizontal rotation driving portion 463, the first vertical rotation driving portion 464, the second distance measuring portion 465, the second vertical rotation driving portion 467, and the image processing portion 469 are realized as the calculation portion 461 executes a program stored in the storage portion 468. Alternatively, the first distance measuring portion 462, the first horizontal rotation driving portion 463, the first vertical rotation driving portion 464, the second distance measuring portion 465, the second vertical rotation driving portion 467, and the image processing portion 469 may be realized by hardware or may be realized by a combination of hardware and software.

For example, the storage portion 468 stores a sequence program for measurement, an image processing program for image processing, a calculation program, or the like. Examples of the storage portion 468 include a semiconductor memory built into the three-dimensional survey apparatus 2 or the like. Other examples of the storage portion 468 include various storage media connectable to the three-dimensional survey apparatus 2 such as a compact disc (CD), a digital versatile disc (DVD), a random access memory (RAM), and a read only memory (ROM).

A program that is executed by a computer including the control calculation portion 46 corresponds to the "three-dimensional survey program" according to the present invention. A "computer" as used herein is not limited to a personal computer and collectively refers to devices and apparatuses capable of realizing functions of the present invention including arithmetic processing units and microcomputers included in information processing devices.

The leveling portion 41 is a portion to be attached to a tripod (not illustrated) and has, for example, three adjustment screws 411. Leveling of the leveling portion 41 is performed by adjusting, at a survey position, the adjustment screws 411 so that an inclination sensor (not illustrated) provided on the first mount portion 42 detects level. In other words, the first mount portion 42 is kept level by leveling using the adjustment screws 411 at a survey position.

The first horizontal rotation portion 43 has a first horizontal rotary shaft 431, a bearing 432, a first horizontal drive motor 433, and a first horizontal angle detector (for example, an encoder) 434. The first horizontal rotary shaft 431 has a vertically-extending first vertical axial center 436 and is rotatably supported by the base portion 48 via the bearing 432. The first mount portion 42 is supported by the first horizontal rotary shaft 431 and integrally rotates with the first horizontal rotary shaft 431 in a horizontal direction around the first vertical axial center 436 due to a drive force transmitted from the first horizontal drive motor 433.

A rotational angle of the first horizontal rotary shaft 431 relative to the base portion 48 (in other words, a rotational angle of the first mount portion 42) is detected by the first horizontal angle detector 434. A detection result of the first horizontal angle detector 434 is input to the calculation portion 461. Drive of the first horizontal drive motor 433 is controlled by the first horizontal rotation driving portion 463 based on the detection result of the first horizontal angle detector 434.

The first vertical rotation portion 44 has a first vertical rotary shaft 441, a bearing 442, a first vertical drive motor 443, and a first vertical angle detector (for example, an encoder) 444. The first vertical rotary shaft 441 has a horizontally-extending first horizontal axial center 446 and is rotatably supported by the first mount portion 42 via the bearing 442. One end of the first vertical rotary shaft 441 protrudes into a gap portion 421 of the first mount portion 42. The telescope portion 45 is supported by the one end of the first vertical rotary shaft 441 that protrudes into the gap portion 421 of the first mount portion 42, and integrally rotates with the first vertical rotary shaft 441 in a vertical direction around the first horizontal axial center 446 due to a drive force transmitted from the first vertical drive motor 443.

The first vertical angle detector 444 is provided at another end of the first vertical rotary shaft 441. A rotational angle of the first vertical rotary shaft 441 relative to the first mount portion 42 (in other words, a rotational angle of the telescope portion 45) is detected by the first vertical angle detector 444. A detection result of the first vertical angle detector 444 is input to the calculation portion 461. Drive of the first vertical drive motor 443 is controlled by the first vertical rotation driving portion 464 based on the detection result of the first vertical angle detector 444.

As described earlier, the telescope portion 45 is supported by the first vertical rotary shaft 441 and rotates in a vertical direction around the first horizontal axial center 446 due to a drive force transmitted from the first vertical drive motor 443. The telescope portion 45 has a collimating telescope 458, and is collimated to the measurement object 7 including the target of measurement 6 and irradiates the measurement object 7 with the first ranging light 455. The first ranging light 455 is emitted onto a ranging optical axis of the telescope portion 45. The ranging optical axis of the telescope portion 45 intersects with the first vertical axial center 436 and is perpendicular to the first horizontal axial center 446. An intersection point of the ranging optical axis of the telescope portion 45 and the first vertical axial center 436 may be set to a machine reference point of the collimating ranging unit 4. In the description of the present embodiment, a case where the machine reference point of the collimating ranging unit 4 is an intersection point of the ranging optical axis of the telescope portion 45 and the first vertical axial center 436 will be cited as an example.

The telescope portion 45 has a first ranging light-emitting portion 451, a first ranging light-receiving portion 452, and a collimating light-receiving portion 453.

The first ranging light-emitting portion 451 is driven and controlled by the first distance measuring portion 462. The first ranging light-emitting portion 451 is provided inside the telescope portion 45 and, for example, emits the first ranging light 455 that is a laser beam or the like in a direction perpendicular to the first horizontal axial center 446. The first ranging light 455 emitted from the first ranging light-emitting portion 451 irradiates the measurement object 7. As described earlier, the measurement object of which the collimating ranging unit 4 performs ranging and angle measurement is not limited to the measurement object 7 such as an architectural structure and may be the target of measurement 6 such as a prism. The first reflected ranging light 456 that is reflected by the measurement object 7 is received by the first ranging light-receiving portion 452 provided inside the telescope portion 45. The first ranging light-receiving portion 452 converts brightness and darkness (a light reception result) of the received first reflected ranging light 456 into an electronic signal (a light reception signal) and transmits the light reception signal to the first distance measuring portion 462. In addition, the first ranging light-receiving portion 452 receives internal reference light (not illustrated) guided from a reference light optical portion (not illustrated), converts the internal reference light into an electric signal, and transmits the electrical signal to the first distance measuring portion 462.

The first distance measuring portion 462 calculates the distance to the measurement object 7 based on the light reception signal transmitted from the first ranging light-receiving portion 452. In other words, the first reflected ranging light 456 and the internal reference light are respectively converted into a first reflected ranging light electrical signal and an internal reference light electrical signal and then sent to the first distance measuring portion 462. The distance to the measurement object 7 is measured based on a difference in time intervals between the first reflected ranging light electrical signal and the internal reference light electrical signal. A calculation result of the first distance measuring portion 462 is input to the calculation portion (CPU) 461.

The calculation portion 461 calculates coordinates of the measurement object 7 based on the measured distance to the measurement object 7, a vertical angle detected by the first vertical angle detector 444, and a horizontal angle detected by the first horizontal angle detector 434. Alternatively, the calculation portion 461 may calculate coordinates of the machine reference point of the collimating ranging unit 4 with a prescribed position as a reference based on the measured distance to the measurement object 7, the vertical angle detected by the first vertical angle detector 444, and the horizontal angle detected by the first horizontal angle detector 434.

The collimating light-receiving portion 453 is an image sensor such as a charge coupled device (CCD) or a complementary metal oxide semiconductor (CMOS) and receives reflected collimating light 457 with a wavelength region that differs from a wavelength region of the first reflected ranging light 456. The reflected collimating light 457 is light which has a wavelength region that differs from a wavelength region of the first reflected ranging light 456 and which is reflected by the measurement object 7. In other words, the collimating light-receiving portion 453 receives the reflected collimating light 457 that is reflected by the measurement object 7 and optically receives an image of the measurement object 7. Examples of the reflected collimating light 457 include natural light and infrared light. However, the reflected collimating light 457 is not limited thereto. The reflected collimating light 457 is received by the collimating light-receiving portion 453 provided inside the telescope portion 45. The collimating light-receiving portion 453 converts brightness and darkness (a light reception result) of the reflected collimating light 457 into an electronic signal (an image signal) and transmits the image signal to the image processing portion 469.

The image processing portion 469 executes image processing of the image signal transmitted from the collimating light-receiving portion 453 and transmits the processed image signal to the calculation portion 461 as an image data signal. The calculation portion 461 executes a calculation based on the image data signal transmitted from the image processing portion 469 and executes control to cause the display portion 471 of the operation display portion 47 to display an image of a collimation range of the telescope portion 45.

The inclinometer 49 measures an inclination (an inclination angle) of the collimating ranging unit 4 relative to gravity. A measurement result of the inclinometer 49 is input to the calculation portion 461.

The scanner unit 5 according to the present embodiment has a second mount portion 52, a second vertical rotation portion 54, a scanning mirror 55, a second ranging light-emitting portion 56, and a second ranging light-receiving portion 57 and is fixed to an upper part of the collimating ranging unit 4. Alternatively, the scanner unit 5 may have a horizontal rotation portion similar to the first horizontal rotation portion 43 of the collimating ranging unit 4. In this case, the scanner unit 5 is rotatably provided in the horizontal direction relative to the collimating ranging unit 4.

The second vertical rotation portion 54 has a second vertical rotary shaft 541, a bearing 542, a second vertical drive motor 543, and a second vertical angle detector (for example, an encoder) 544. The second vertical rotary shaft 541 has a horizontally-extending second horizontal axial center 546 and is rotatably supported by the second mount portion 52 via the bearing 542. One end of the second vertical rotary shaft 541 protrudes into a recessed portion 521 of the second mount portion 52. The scanning mirror 55 is supported by the one end of the second vertical rotary shaft 541 that protrudes into the recessed portion 521 of the second mount portion 52, and integrally rotates with the second vertical rotary shaft 541 in a vertical direction around the second horizontal axial center 546 due to a drive force transmitted from the second vertical drive motor 543.

The second vertical angle detector 544 is provided at another end of the second vertical rotary shaft 541. A rotational angle of the second vertical rotary shaft 541 relative to the second mount portion 52 (in other words, a rotational angle of the scanning mirror 55) is detected by the second vertical angle detector 544. A detection result of the second vertical angle detector 544 is input to the calculation portion 461. Drive of the second vertical drive motor 543 is controlled by the second vertical rotation driving portion 467 based on the detection result of the second vertical angle detector 544.

The second horizontal axial center 546 is parallel to the first horizontal axial center 446. A distance between the first horizontal axial center 446 and the second horizontal axial center 546 is known. In other words, a position of the second horizontal axial center 546 relative to the first horizontal axial center 446 is known.

The scanning mirror 55 is a deflecting optical member and reflects, at a right angle, the second ranging light 565 incident from a horizontal direction. In other words, the scanning mirror 55 reflects, in a direction perpendicular to the second horizontal axial center 546, the second ranging light 565 incident from a horizontal direction. As described earlier, the scanning mirror 55 is supported by the second vertical rotary shaft 541 and rotates in a vertical direction around the second horizontal axial center 546 due to a drive force transmitted from the second vertical drive motor 543. Accordingly, the scanning mirror 55 causes rotational irradiation with the second ranging light 565 to be performed within a plane that intersects with (specifically, perpendicular to) the second horizontal axial center 546. In addition, the scanning mirror 55 reflects, toward the second ranging light-receiving portion 57, the second reflected ranging light 566 reflected by the measurement object 7 and incident to the scanning mirror 55. In other words, the scanning mirror 55 reflects, in a direction parallel to the second horizontal axial center 546, the second reflected ranging light 566 reflected by the measurement object 7 and incident to the scanning mirror 55.

An intersection point of the second horizontal axial center 546 and the scanning mirror 55 is set to a machine reference point of the scanner unit 5. For example, the machine reference point of the collimating ranging unit 4 and the machine reference point of the scanner unit 5 are present on the first vertical axial center 436 as a same straight line. In other words, a vertical line that passes the machine reference point of the scanner unit 5 coincides with the first vertical axial center 436. A distance between the machine reference point of the collimating ranging unit 4 and the machine reference point of the scanner unit 5 is known.

As shown in FIG. 2, the second ranging light-emitting portion 56 has a light-emitting element 561 and a light-emitting optical portion 562 including an objective lens or the like and is driven and controlled by the second distance measuring portion 465. The light-emitting element 561 is, for example, a semiconductor laser and emits the second ranging light 565 via the light-emitting optical portion 562 onto an optical axis that matches the second horizontal axial center 546. The second ranging light 565 is a pulse laser beam of infrared light as invisible light. The light-emitting element 561 is controlled by the second distance measuring portion 465 and emits pulse light in a required state including a required light intensity and a required pulse interval.

As shown in FIG. 2, the second ranging light-receiving portion 57 has a light-receiving element 571 and a light-receiving optical portion 572 including a condenser lens or the like. The light-receiving element 571 receives the second reflected ranging light 566 which is the second ranging light 565 having been reflected by the measurement object 7, having been reflected by the scanning mirror 55, and having passed through the light-receiving optical portion 572. The light-receiving element 571 converts brightness and darkness (a light reception result) of the received second reflected ranging light 566 into an electronic signal (a light reception signal) and transmits the light reception signal to the second distance measuring portion 465 and the calculation portion 461. In addition, the light-receiving element 571 receives internal reference light (not illustrated) guided from the reference light optical portion (not illustrated), converts the internal reference light into an electric signal, and transmits the electrical signal to the second distance measuring portion 465.

The second distance measuring portion 465 calculates the distance to the measurement object 7 based on the light reception signal transmitted from the second ranging light-receiving portion 57 (specifically, the light-receiving element 571) . In other words, the second reflected ranging light 566 and the internal reference light are respectively converted into a second reflected ranging light electrical signal and an internal reference light electrical signal and then sent to the second distance measuring portion 465. The distance to the measurement object 7 is measured based on a difference in time intervals between the second reflected ranging light electrical signal and the internal reference light electrical signal. A calculation result of the second distance measuring portion 465 is input to the calculation portion 461.

The calculation portion 461 calculates coordinates of the measurement object 7 based on the measured distance to the measurement object 7, a vertical angle detected by the second vertical angle detector 544, and a horizontal angle detected by the first horizontal angle detector 434. In addition, by recording coordinates of the measurement object 7 for each pulse light beam, the calculation portion 461 can obtain point cloud data with respect to an entire measurement range or point cloud data with respect to the measurement object 7.

Furthermore, the calculation portion 461 calculates intensity (reflection intensity) of the second reflected ranging light 566 based on a light reception signal transmitted from the light-receiving element 571 of the second ranging light-receiving portion 57 and executes control to cause an image indicating the intensity of the second reflected ranging light 566 to be superimposed on an image of a collimation range of the telescope portion 45 and to be displayed by the display portion 471 of the operation display portion 47. Accordingly, the worker or the like can check, on the display portion 471, a measurement location (a point or a region) where three-dimensional data has been acquired and a measurement location (a point or a region) where three-dimensional data has not been acquired among the measurement object 7. In other words, the worker or the like can check, on the display portion 471, whether or not there is a data-deficient part that is referred to as a "missing part" or the like where three-dimensional data is not acquired among the measurement object 7 when the scanner unit 5 acquires point cloud data.

Next, operations of the three-dimensional survey apparatus according to the present embodiment will be described with reference to the drawings.

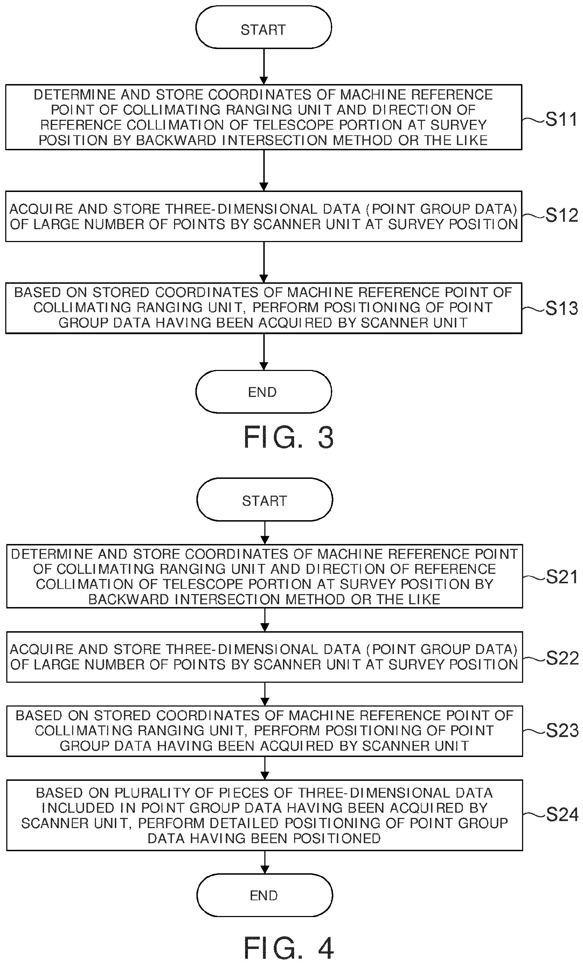

FIG. 3 is a flow chart that represents a first operation of the three-dimensional survey apparatus according to the present embodiment.

It should be noted that FIG. 3 and FIGS. 4 and 5 to be described later are, in other words, flow charts representing steps executed by the three-dimensional survey method according to the present embodiment and steps which the three-dimensional survey program according to the present embodiment causes a computer of the three-dimensional survey apparatus 2 to execute.

First, in step S11, the control calculation portion 46 of the three-dimensional survey apparatus 2 determines coordinates of a machine reference point of the collimating ranging unit 4 and a direction of a reference collimation of the telescope portion 45 of the collimating ranging unit 4 at a survey position using a backward intersection method or the like and stores the coordinates and the direction in the storage portion 468. Specifically, at the survey position, based on a distance from the collimating ranging unit 4 to the target of measurement 6 such as a prism, a vertical angle detected by the first vertical angle detector 444, and a horizontal angle detected by the first horizontal angle detector 434, the control calculation portion 46 calculates coordinates of a machine reference point of the collimating ranging unit 4 and a direction of a reference collimation of the telescope portion 45 of the collimating ranging unit 4 and stores the coordinates and the direction in the storage portion 468.

Next, in step S12, the control calculation portion 46 controls the scanner unit 5 to acquire and store three-dimensional data (point cloud data) of a large number of measurement points related to the measurement object 7 at the survey position.

Next, in step S13, based on the stored coordinates of the machine reference point of the collimating ranging unit 4, the control calculation portion 46 performs positioning of the point cloud data having been acquired by the scanner unit 5. Specifically, by supplying a relative position and a relative attitude of the scanner unit 5 with respect to the collimating ranging unit 4 in advance by calibration, based on the coordinates of the machine reference point of the collimating ranging unit 4 and the direction of the reference collimation of the telescope portion 45 of the collimating ranging unit 4, the control calculation portion 46 can perform positioning of the point cloud data having been acquired by the scanner unit 5. In this manner, the three-dimensional survey apparatus 2 according to the present embodiment calculates coordinates of the machine reference point of the collimating ranging unit 4 by collimation of the telescope portion 45 of the collimating ranging unit 4 and, based on the coordinates of the machine reference point of the collimating ranging unit 4, aligns point cloud data having been acquired by the scanner unit 5.

With the three-dimensional survey apparatus 2 according to the present invention, the point cloud data having been acquired by the scanner unit 5 is automatically aligned at a correct position. Therefore, when executing registration of point cloud data, an occurrence of a situation where a relatively long processing time is necessary, a situation where the registration of the point cloud data cannot be completed, or a situation where manually performing the registration of the point cloud data requires considerable effort can be suppressed. Accordingly, the three-dimensional survey apparatus 2 according to the present embodiment can execute a registration of point cloud data in an efficient manner. It should be noted that various known techniques such as an interactive closest point (ICP) algorithm and methods that are extensions of an ICP algorithm can be utilized as the registration of point cloud data.

FIG. 4 is a flow chart that represents a second operation of the three-dimensional survey apparatus according to the present embodiment.

First, processing of steps S21 to S23 is the same as the processing of steps S11 to S13 described earlier with reference to FIG. 3.

In this case, the collimating ranging unit 4 can acquire the three-dimensional data at the measurement point with high accuracy. On the other hand, the three-dimensional data having been acquired by the collimating ranging unit 4 may include error. When the three-dimensional data having been acquired by the collimating ranging unit 4 includes error, the point cloud data having been positioned in step S23 may include error.

Conversely, in the second operation represented in FIG. 4, in step S24, the control calculation portion 46 performs, based on a plurality of pieces of the three-dimensional data included in the point cloud data having been acquired by the scanner unit 5, detailed positioning of the point cloud data having been positioned. The scanner unit 5 is capable of executing, for example, a point group measurement of several hundreds of thousands of points per second and a highly-efficient survey can be realized at an extremely high speed. Therefore, the number of pieces of three-dimensional data having been acquired by the scanner unit 5 is significantly larger than the number of pieces of three-dimensional data having been acquired by the collimating ranging unit 4. In consideration thereof, in step S24, the control calculation portion 46 uses the three-dimensional data of a large number of measurement points having been acquired by the scanner unit 5 to correct the positioning of the point cloud data.

With the three-dimensional survey apparatus 2 according to the present embodiment, by correcting positioning of the point cloud data using the three-dimensional data of a large number of measurement points having been acquired by the scanner unit 5, the control calculation portion 46 can perform positioning of the point cloud data with higher accuracy. As a result, the point cloud data having been acquired by the scanner unit 5 is aligned at an even more correct position. Accordingly, the three-dimensional survey apparatus 2 according to the present embodiment can execute a registration of point cloud data in an even more efficient manner.

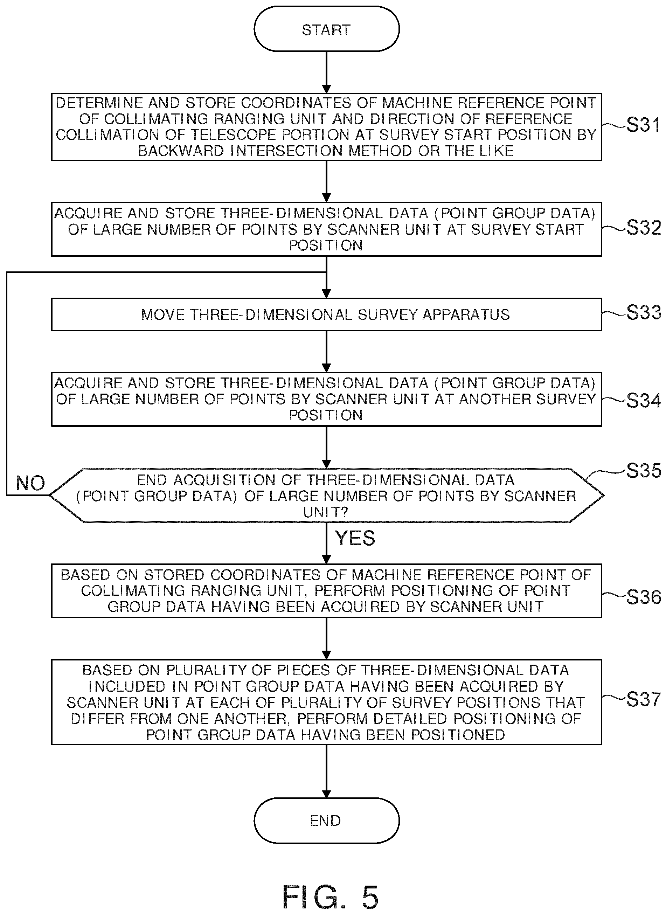

FIG. 5 is a flow chart that represents a third operation of the three-dimensional survey apparatus according to the present embodiment.

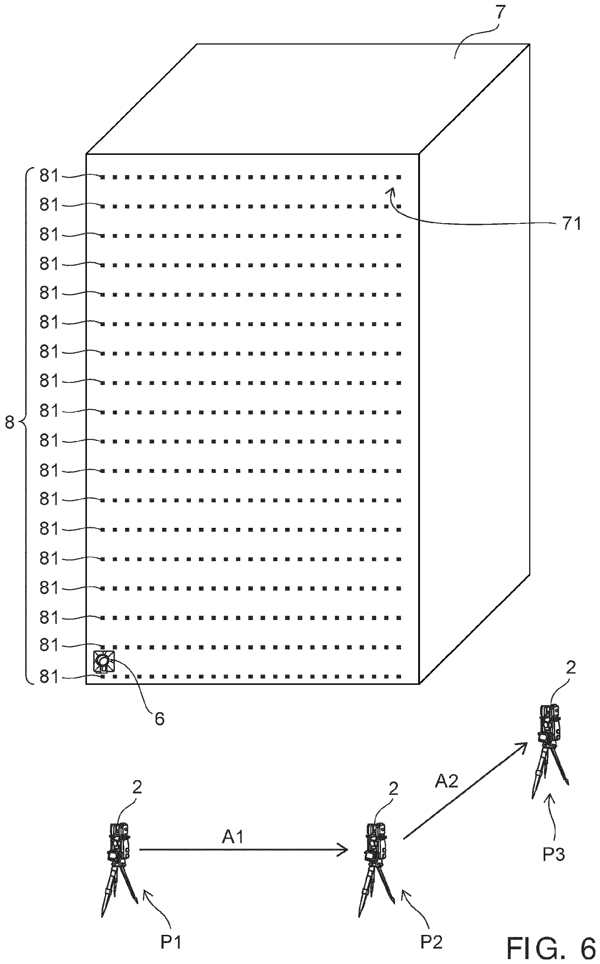

FIG. 6 is a schematic view illustrating circumstances in which the three-dimensional survey apparatus according to the present embodiment acquires point cloud data of a measurement object at a plurality of survey positions.

In the third operation to be described with reference to FIGS. 5 and 6, a case where the measurement object 7 is, for example, a relatively high architectural structure such as a building will be cited as an example. In this case, for example, a worker or the like may not be able to install a target of measurement 6 on upper floors of the measurement object 7. In other words, locations where the target of measurement 6 can be installed may be limited to predetermined locations such as lower floors. The third operation to be described with reference to FIGS. 5 and 6 represents an example of an effective operation in such a case.

First, in step S31, the control calculation portion 46 of the three-dimensional survey apparatus 2 determines coordinates of a machine reference point of the collimating ranging unit 4 and a direction of a reference collimation of the telescope portion 45 of the collimating ranging unit 4 at a survey start position P1 using a backward intersection method or the like and stores the coordinates and the direction in the storage portion 468. Specifically, at the survey start position P1, based on a distance from the collimating ranging unit 4 to the target of measurement 6 such as a prism, a vertical angle detected by the first vertical angle detector 444, and a horizontal angle detected by the first horizontal angle detector 434, the control calculation portion 46 calculates the coordinates of the machine reference point of the collimating ranging unit 4 and the direction of the reference collimation of the telescope portion 45 of the collimating ranging unit 4 and stores the coordinates and the direction in the storage portion 468. In the example represented in FIG. 6, for example, the target of measurement 6 is installed on a lower floor such as a 1st floor or a 2nd floor of a building.

Next, in step S32, the control calculation portion 46 controls the scanner unit 5 to acquire and store three-dimensional data 81 (point cloud data 8) of a large number of measurement points related to the measurement object 7 at the survey start position P1. It should be noted that FIG. 6 represents an example in which the scanner unit 5 acquires the point cloud data 8 that includes the three-dimensional data 81 of a large number of measurement points related to a wall surface 71 of the measurement object 7 at the survey start position P1, a second survey position P2, and a third survey position P3. The wall surface 71 of the measurement object 7 is an example of the "characteristic portion" of the measurement object according to the present invention.

Next, in step S33, as depicted by an arrow A1 represented in FIG. 6, the worker or the like moves the three-dimensional survey apparatus 2 from the survey start position P1 to the second survey position P2. The second survey position P2 is arbitrarily determined by the worker or the like. Next, in step S34, the control calculation portion 46 controls the scanner unit 5 to acquire and store the three-dimensional data 81 (the point cloud data 8) of the large number of measurement points related to the measurement object 7 at another survey position (in this case, the second survey position P2).

Next, when the acquisition of the three-dimensional data 81 (the point cloud data 8) of the large number of measurement points by the scanner unit 5 is not to be ended (step S35: NO), in step S33, as depicted by an arrow A2 represented in FIG. 6, the worker or the like moves the three-dimensional survey apparatus 2 from the second survey position P2 to the third survey position P3. Next, in step S34, the control calculation portion 46 controls the scanner unit 5 to acquire and store the three-dimensional data 81 (the point cloud data 8) of the large number of measurement points related to the measurement object 7 at another survey position (in this case, the third survey position P3).

On the other hand, when the acquisition of the three-dimensional data 81 (the point cloud data 8) of the large number of measurement points by the scanner unit 5 is to be ended (step S35: YES), in step S36, the control calculation portion 46 performs, based on the stored coordinates of the machine reference point of the collimating ranging unit 4, positioning of the point cloud data 8 having been acquired by the scanner unit 5. Processing of step S36 is the same as the processing of step S13 described earlier with reference to FIG. 3.

Subsequently, in step S37, the control calculation portion 46 performs the detailed positioning of the positioned point cloud data 8 based on a plurality of pieces of the three-dimensional data 81 included in the point cloud data 8 having been acquired by the scanner unit 5 at each of a plurality of the survey positions (in the example represented in FIG. 6, the survey start position P1, the second survey position P2, and the third survey position P3) that differ from one another.

More specifically, as described earlier with reference to FIG. 4, the three-dimensional data 81 having been acquired by the collimating ranging unit 4 may include error. In this case, the point cloud data 8 having been positioned in step S36 may include error. For example, with respect to the point cloud data 8 related to the wall surface 71 of the measurement object 7 represented in FIG. 6, the point cloud data 8 having been acquired by the scanner unit 5 at the survey start position P1 may be displaced from the point cloud data 8 having been acquired by the scanner unit 5 at each of the second survey position P2 and the third survey position P3 or the point cloud data 8 having been acquired by the scanner unit 5 at the second survey position P2 may be displaced from the point cloud data 8 having been acquired by the scanner unit 5 at the third survey position P3. As a result, the point cloud data 8 having been acquired by the scanner unit 5 may become mutually inconsistent at each survey position and the wall surface 71 of the measurement object 7 may end up being displayed on the display portion 471 or the like in a doubled or tripled state.

Conversely, as described earlier, in step S37, the control calculation portion 46 of the three-dimensional survey apparatus 2 according to the present embodiment performs, based on a plurality of pieces of the three-dimensional data 81 included in the point cloud data 8 having been acquired by the scanner unit 5 at each survey position, detailed positioning of the point cloud data 8 having been positioned. For example, by performing average positioning of the wall surface 71 of the measurement object 7 using the three-dimensional data 81 of a large number of measurement points having been acquired by the scanner unit 5, the control calculation portion 46 can acquire highly-accurate point cloud data 8 over a relatively wide region such as a wall surface of a building. In other words, while the scanner unit 5 is unable to acquire the three-dimensional data 81 with accuracy as high as the accuracy of the three-dimensional data 81 acquired by the collimating ranging unit 4, the scanner unit 5 is able to acquire the three-dimensional data 81 of a significantly larger number of measurement points than the collimating ranging unit 4. Therefore, based on a plurality of pieces of the three-dimensional data 81 included in the point cloud data 8 having been acquired by the scanner unit 5 at each survey position, the control calculation portion 46 can recognize an overall shape of the measurement object 7 in a stable manner and perform average positioning of the wall surface 71 of the measurement object 7 or the like.

With the three-dimensional survey apparatus 2 according to the present embodiment, when the measurement object 7 is a relatively high architectural structure such as a building and a location where the target of measurement 6 can be installed is limited to a predetermined location, using three-dimensional data 81 of a large number of measurement points having been acquired by the scanner unit 5 at each survey position, the control calculation portion 46 can adjust an inconsistency in three-dimensional data 81 at each survey position related to a characteristic portion such as the wall surface 71 of the measurement object 7 and perform positioning of point cloud data 8 with higher accuracy. As a result, the point cloud data 8 having been acquired by the scanner unit 5 is aligned at an even more correct position. Accordingly, the three-dimensional survey apparatus 2 according to the present embodiment can execute a registration of the point cloud data 8 in an even more efficient manner.

FIG. 6 represents an example in which the scanner unit 5 acquires the three-dimensional data 81 (the point cloud data 8) of a large number of measurement points at three survey positions. However, the number of survey positions of the three-dimensional survey apparatus 2 is not limited to three locations and may be two locations or four or more locations.

An embodiment of the present invention has been described above. However, it is to be understood that the present invention is not limited to the embodiment described above and that various modifications can be made without departing from the scope of the appended claims. The configurations of the embodiment described above can be partially omitted or arbitrarily combined in manners that differ from those described above.

## Claims

1. A three-dimensional survey apparatus (2) which acquires three-dimensional data of a measurement object (7), the three-dimensional survey apparatus (2) comprising:
a collimating ranging unit (4) which irradiates the measurement object (7) with first ranging light (455) by collimation of a telescope portion (45) and which, based on first reflected ranging light (456) that is reflection of the first ranging light (455) by the measurement object (7), measures a distance to the measurement object (7) and detects a direction of the collimation;
a scanner unit (5) which is integrally provided with the collimating ranging unit (4) and rotatingly emits second ranging light (565) and which, based on second reflected ranging light (566) that is reflection of the second ranging light (565) by the measurement object (7), measures a distance to the measurement object (7) and detects an emission direction of the second ranging light (565) to acquire point cloud data related to the measurement object (7); and
a control calculation portion (46) which is provided in at least one of the collimating ranging unit (4) and the scanner unit (5), wherein
the control calculation portion (46) calculates and stores coordinates of a machine reference point of the collimating ranging unit (4) at a survey position by collimation of the telescope portion (45), stores the point cloud data having been acquired at the survey position by controlling the scanner unit (5), and executes control for performing, based on the stored coordinates of the machine reference point, positioning of the point cloud data having been acquired by the scanner unit (5).

2. The three-dimensional survey apparatus (2) according to claim 1, wherein the control calculation portion (46) executes control for performing, based on a plurality of pieces of the three-dimensional data included in the point cloud data having been acquired by the scanner unit (5), detailed positioning of the point cloud data having been positioned.

3. The three-dimensional survey apparatus (2) according to claim 2, wherein the control calculation portion (46) performs the detailed positioning based on a plurality of pieces of the three-dimensional data included in the point cloud data having been acquired by the scanner unit (5) at each of a plurality of the survey positions that differ from one another.

4. A three-dimensional survey method which is executed by a three-dimensional survey apparatus (2) that acquires three-dimensional data of a measurement object (7), the three-dimensional survey apparatus (2) including:
a collimating ranging unit (4) which irradiates the measurement object (7) with first ranging light (455) by collimation of a telescope portion (45) and which, based on first reflected ranging light (456) that is reflection of the first ranging light (455) by the measurement object (7), measures a distance to the measurement object (7) and detects a direction of the collimation;
a scanner unit (5) which is integrally provided with the collimating ranging unit (4) and rotatingly emits second ranging light (565) and which, based on second reflected ranging light (566) that is reflection of the second ranging light (565) by the measurement object (7), measures a distance to the measurement object (7) and detects an emission direction of the second ranging light (565) to acquire point cloud data related to the measurement object (7); and
a control calculation portion (46) which is provided in at least one of the collimating ranging unit (4) and the scanner unit (5), wherein
the three-dimensional survey method comprises the steps (S11, S12, S13) of: calculating and storing coordinates of a machine reference point of the collimating ranging unit (4) at a survey position by collimation of the telescope portion (45); storing the point cloud data having been acquired at the survey position by controlling the scanner unit (5); and performing, based on the stored coordinates of the machine reference point, positioning of the point cloud data having been acquired by the scanner unit (5) .

5. A three-dimensional survey program which is executed by a computer of a three-dimensional survey apparatus (2) that acquires three-dimensional data of a measurement object (7), the three-dimensional survey apparatus (2) including:
a collimating ranging unit (4) which irradiates the measurement object (7) with first ranging light (455) by collimation of a telescope portion (45) and which, based on first reflected ranging light (456) that is reflection of the first ranging light (455) by the measurement object (7), measures a distance to the measurement object (7) and detects a direction of the collimation;
a scanner unit (5) which is integrally provided with the collimating ranging unit (4) and rotatingly emits second ranging light (565) and which, based on second reflected ranging light (566) that is reflection of the second ranging light (565) by the measurement object (7), measures a distance to the measurement object (7) and detects an emission direction of the second ranging light (565) to acquire point cloud data related to the measurement object (7); and
a control calculation portion (46) which is provided in at least one of the collimating ranging unit (4) and the scanner unit (5), wherein
the three-dimensional survey program causes the computer to execute the steps (S11, S12, S13) of:
calculating and storing coordinates of a machine reference point of the collimating ranging unit (4) at a survey position by collimation of the telescope portion (45); storing the point cloud data having been acquired at the survey position by controlling the scanner unit (5); and performing, based on the stored coordinates of the machine reference point, positioning of the point cloud data having been acquired by the scanner unit (5).
